# EUROPÄISCHE PATENTANMELDUNG

(11) **EP 3 258 184 A1**
(43) Veröffentlichungstag der Anmeldung: **20.12.2017**
(21) Anmeldenummer: 16174377.8
(22) Anmeldetag: 14.06.2016
(51) Int. Cl.: F24F 12/00, F24F 3/147, F24F 3/14

(54) **VORRICHTUNG FÜR EIN GEBÄUDE, INSBESONDERE EINE SCHWIMMHALLE, ZUM AUSTAUSCHEN VON FEUCHTIGKEIT UND WÄRME**

(71) Anmelder: Grüniger, Emil, 8852 Altendorf (CH)
(72) Erfinder: GRÜNIGER, Emil, 8852 Altendorf (CH); ÖSTBERG, Hans, 77422 Avesta (SE)
(74) Vertreter: Schaad, Balass, Menzl & Partner AG

(57) **Zusammenfassung**

Die Vorrichtung für ein Gebäude, insbesondere eine Schwimmhalle, zum Austauschen von Feuchtigkeit und Wärme umfasst ein Gehäuse (2) mit einem Ablufteinlass (10) und einem Fortluftauslass (16), die über einen ersten Strömungskanal (20) miteinander verbunden sind, und mit einem Aussenlufteinlass (14) und einem Zuluftauslass (12), die über einen zweiten Strömungskanal (18) miteinander verbunden sind. Ein Wärmetauscher (22) zum Austauschen von Wärme zwischen der Abluft (28) und der Aussenluft ist durch einen mit variabler Drehgeschwindigkeit antreibbaren Sorptionsrotor (22) gebildet, welcher auch als Feuchtigkeitstauscher zwischen der Abluft (28) und der Aussenluft (30) wirkt. Im stationären Betrieb wird mit wenigstens 90%, bevorzugt mit wenigstens annähernd 100%, Aussenluft (30) gefahren, welche mit dem Sorptionsrotor (22), ohne Kondensationsphase, auf die geforderte absolute Feuchtigkeit gebracht wird.

## Beschreibung

Die Erfindung betrifft eine Vorrichtung für ein Gebäude, insbesondere eine Schwimmhalle, zum Austauschen von Feuchtigkeit und Wärme gemäss dem Oberbegriff des Anspruchs 1 und ein Verfahren zum Feuchtigkeits- und Wärmeaustauch für ein Gebäude, insbesondere eine Schwimmhalle, gemäss dem Oberbegriff des Anspruchs 10.

Eine Anlage zum Erwärmen und Entfeuchten einer Halle wie einer Schwimmhalle ist zum Beispiel aus dem Dokument DE 10 2006 007 845 B4 bekannt. Diese Anlage besitzt eine Aussenluftzufuhröffnung, über die die Aussenluft in einen Kanal tritt, der die Aussenluft durch die Anlage führt, wonach sie über eine Zuluftöffnung in die Halle erwärmt austritt. Ferner besitzt die Anlage eine Abluftöffnung, die die Abluft über einen Kanal zur Fortluftauslassöffnung führt. Die beiden Kanäle kreuzen sich in einem Wärmetauscher, welcher Wärmeenergie von der Abluft an die Zuluft überträgt. Nahe der Zuluftöffnung bzw. der Abluftöffnung ist im betreffenden Kanal je ein Gebläse oder Ventilator angeordnet. Hinter dem Wärmetauscher durchströmt die Abluft einen Verdampfer eines Wärmepumpenkreislaufs, dessen Kondensator im Zuluftkanal angeordnet ist, so dass vom Verdichter der Wärmepumpe die vom Verdampfer aufgenommene Wärmeenergie dem Kondensator zugeführt und damit an die Zuluft übertragen wird. Hierbei ist der Verdichter leistungsgeregelt, um die Heiz- und/oder die Entfeuchtungsleistung der Anlage zu regeln.

Für die Luft- und Wasseraufbereitung in einer Schwimmhalle werden verschiedene Chemikalien zur Entfernung von Mikro-Organismen und Belastungsstoffen eingesetzt. Im Beckenwasser entstehen zum Beispiel durch den Zusatz von Chlor eine grosse Anzahl verschiedener Chlorverbindungen, die sich zusammen mit der Wasserausdunstung aus dem Schwimmbecken in die Schwimmhallenluft verteilen und welche Gesundheitsfragen für das Personal und die Badenden aufwerfen. Ferner spielen solche Chemikalien eine Rolle in der Verschlechterung der Schwimmhalle, zum Beispiel durch erhöhte Korrosion.

Mit einer Anlage zum Erwärmen und Entfeuchten einer Schwimmhalle, wie im Dokument DE 10 2006 007 845 B4 offenbart, muss ein wesentlicher Anteil der Abluft durch einen Bypass mit der Zuluft in die Schwimmhalle zurückgeführt werden, um die erwünschte Feuchtigkeit und Temperatur zu behalten, d.h. um zu vermeiden, unter die Behaglichkeitsgrenze in der Schwimmhalle zu fallen.

Diese Mischung der mit Chemikalien und Mikro-Organismen beladenen Abluft mit der Zuluft, führt zu einer Übertragung dieser Chemikalien und Mikro-Organismen an die saubere Zuluft und zu ihrer Verteilung in der ganzen Schwimmhalle. Eine gute Luftqualität in Schwimmhallen erfordert einen möglichst grossen Austausch der Schwimmhallenluft mit sauberer Aussenluft. Mit dieser Anlage wird erst durch die nächtliche Abschaltung und Durchlüftung mit Aussenluft die Halle wieder dekontaminiert, allerdings mit grossem zusätzlichen Energieaufwand.

Ferner verursachen Verdampfung und Kondensation der mit Chemikalien beladenen Abluft in dieser Anlage Korrosion, welche die Wartungskosten erhöhen und die Lebensdauer der Anlage verkürzen. Der Einsatz von Kunststoff-Materialien wie z.B. Polypropylen korrodieren nicht, jedoch sind solche Materialien nicht optimal für Dichtheit und schwer zusammenzufügen. Durch Temperaturvariationen während des Betriebes der Anlage sind Bauteilen aus Polypropylen grossen Spannungen ausgesetzt und oft Ursachen von Leckagen. Ausserdem sind Anlagen aus Kunststoff-Materialien nicht feuerresistent und stellen durch ihre kompakte Bauart eine grosse Feuerlast dar. Überdies sind solche Anlagen schwer zu reinigen.

Aufgabe der vorliegenden Erfindung ist es somit, eine Vorrichtung für ein Gebäude, insbesondere eine Schwimmhalle, zum Austauschen von Feuchtigkeit und Wärme und ein Verfahren zum Feuchtigkeits- und Wärmeaustauch für ein Gebäude, insbesondere eine Schwimmhalle, zur Verfügung zu stellen, welche eine Mischung der mit Chemikalien und Mikro-Organismen beladenen Abluft mit der Zuluft und Korrosion in der Vorrichtung wesentlich verkleinert.

Diese Aufgabe wird erfindungsgemäss durch eine Vorrichtung gemäss Anspruch 1 und ein Verfahren gemäss Anspruch 10 gelöst. Bevorzugte Ausführungsformen der Erfindung sind in den abhängigen Ansprüchen wiedergegeben.

Die Erfindung betrifft somit eine Vorrichtung für ein Gebäude, insbesondere eine Schwimmhalle, zum Austauschen von Feuchtigkeit und Wärme umfassend ein Gehäuse mit einem Ablufteinlass und einem Fortluftauslass, die über einen ersten Strömungskanal miteinander verbunden sind und mit einem Aussenlufteinlass und einem Zuluftauslass, die über einen zweiten Strömungskanal miteinander verbunden sind.

Weiter umfasst die Vorrichtung einen ersten Ventilator, um Abluft durch den ersten Strömungskanal aus dem Gebäude als Fortluft abzuführen, und einen zweiten Ventilator, um Aussenluft durch den zweiten Strömungskanal ins Gebäude als Zuluft hineinzuführen.

Ausserdem umfasst die Vorrichtung einen Wärmetauscher zum Austauschen von Wärme zwischen der Abluft und der Aussenluft, vorzugsweise einen regenerativen Wärmetauscher.

Erfindungsgemäss ist der Wärmetauscher durch einen mit variabler Drehgeschwindigkeit antreibbaren Sorptionsrotor gebildet, welcher auch als Feuchtigkeitstauscher zwischen der Abluft und der Aussenluft wirkt. Im stationären Betrieb wird mit wenigstens 90% Aussenluft gefahren, welche mit dem Sorptionsrotor, ohne Kondensationsphase, auf die geforderte absolute Feuchtigkeit gebracht wird. Vorteilhafterweise wird im stationären Betrieb mit wenigstens annähernd 100% Aussenluft, ohne Kondensationsphase, gefahren.

Mit dem Begriff "stationärer Betrieb" ist der Betrieb der Vorrichtung nach der transienten Phase beim Anfahren gemeint, d.h. bis das gewünschte Klima im Gebäude, insbesondere in der Schwimmhalle, erreicht ist.

Mit dem Begriff "wenigstens annähernd 100% Aussenluft" werden die Leckagen im Sorptionsrotor berücksichtigt, welche zur Mischung eines kleinen Anteils der Abluft - typischerweise höchstens 3%, insbesondere höchstens 1% - mit der Aussenluft führen.

Im stationären Betrieb mit wenigstens annähernd 100% Aussenluft bedeutet dies, dass die aus dem Gebäude durch den Ablufteinlass einströmende Abluft durch den Fortluftauslass wenigstens annähernd vollständig an die Umgebung abgegeben wird, und gleichzeitig die durch den Aussenlufteinlass eintretende Aussenluft mit dem Sorptionsrotor, ohne Kondensationsphase, auf die geforderte absolute Feuchtigkeit gebracht, und durch den Zuluftauslass dem Gebäude zugeführt wird. Folglich wird eine Mischung der mit Chemikalien und Mikro-Organismen beladenen Abluft mit der Zuluft und Korrosion in der Vorrichtung wenigstens annähernd vollständig vermieden.

Im stationären Betrieb mit wenigstens 90% Aussenluft ist eine Mischung der mit Chemikalien und Mikro-Organismen beladenen Abluft mit der Zuluft und Korrosion in der Vorrichtung wesentlich verkleinert im Vergleich mit Anlagen, wie im Stand der Technik beschrieben, z.B. Anlagen basierend auf Plattenwärmetauscher, welche typischerweise mit mindestens 30% Aussenluft gefahren werden.

Die Strömungen der Abluft und der Aussenluft sind voneinander getrennt und nur ein kleiner Abluftanteil wird durch den Sorptionsrotor transportiert, welcher typischerweise über eine Spülzone im Sorptionsrotor mit Aussenluft gespült und der Fortluft zugeführt wird. Dadurch wird eine Mischung der mit Chemikalien und Mikro-Organismen beladenen Abluft mit der Aussenluft weitgehend vermieden und entsprechend eine Zuluft annähernd ohne Kontamination dem Gebäude zugeführt. Da der Wärme- und Feuchtigkeitsaustausch ohne Kondensation erfolgt, wird gleichzeitig Korrosion in der Vorrichtung vermieden.

Bei Bedarf wird die Zuluft mit einer Nachheizung auf die erforderliche Temperatur gebracht. Diese Nachheizung, vorzugsweise ein Pumpen-Warmwasser-Erhitzer und/ oder ein Kondensator einer Wärmepumpe, wird im zweiten Strömungskanal zur Regulierung der Temperatur der Zuluft angeordnet, vorzugsweise zwischen dem Sorptionsrotor und dem Zuluftauslass. Die Wärmepumpe kann im ersten Strömungskanal mit dem Verdampfer oder ausserhalb der Vorrichtung angeordnet sein. Andere Wärmequellen für die Nachheizung sind ebenfalls möglich, wie etwa Fernheizung oder andere Energierückgewinnungssysteme. Die Art der Nachheizung wird beispielweise nach Vergleich der Betriebsplanung der Vorrichtung und der Energiepreisen ausgewählt.

Sorptionsrotoren sind dem Fachmann bekannt, zum Beispiel aus den Dokumenten DE 10 2005 003 543 A1, EP 2 520 890 A1 oder DE 101 57 550 A1. Der Sorptionsrotor bildet eine zylinderförmige, um eine Achse rotierende, eine erste und eine zweite Stirnfläche aufweisende Speichermasse, welche üblicherweise aus einer dünnen, um eine Nabe gewickelten, gewellten Folie aus Metall, bevorzugt Aluminium, oder Papierwerkstoff besteht, wodurch eine Vielzahl axial angeordnete, von der ersten zur zweiten Stirnfläche verlaufende, kleine Kanäle entstehen. Je nach Verwendung wird die Oberfläche der Folie mit einem Sorptionsmittel beschichtet, um den erwünschten Feuchtigkeitsaustausch ohne Kondensation mit dem Sorptionsrotor zu erreichen.

Eine vorteilhafte Ausbildung der erfindungsgemässen Vorrichtung sieht vor, dass die Oberfläche der Speichermasse des Sorptionsrotors mit Zeolith-Material beschichtet ist, wie etwa im Dokument DE 10 2005 003 543 A1 offenbart, bevorzugt mit einer Porengrösse zwischen 0,3 nm und 0,5 nm. Die Anwendung eines solchen Zeolith-Materials vermeidet, dass flüchtige organische Verbindungen (VOC, Volatile Organic Compounds) und Belastungsstoffe über die Oberfläche der Speichermasse von der Abluft an die Zuluft übertragen werden. Hingegen können Wasserdampfmoleküle von dieser Beschichtung aufgenommen und abgegeben werden.

Typischerweise definiert die Rotationsachse des Sorptionsrotors eine Längsachse des Gehäuses in dem er eingebaut ist, und der erste und der zweite Strömungskanal verlaufen entlang dieser Achse wenigstens annähernd rechtwinklig zu den Stirnflächen des Sorptionsrotors, sodass die Zuluft und die Abluft gleichzeitig, aber getrennt im jeweiligen Strömungskanal, die Speichermasse durchströmen.

In einer bevorzugten Ausführungsform sind der Aussenlufteinlass und der Fortluftauslass mit einer Aussenlufteinlass- bzw. Fortluftauslassklappe versehen, die geschlossen werden, um die Vorrichtung von der Umgebung zu trennen. Dies kann im nicht-stationären Betrieb der Fall sein, zum Beispiel beim Anfahren der Vorrichtung oder bei der Zirkulation der Schwimmhallenluft über die Vorrichtung. Selbstverständlich können auch der Ablufteinlass und der Zuluftauslass jeweils mit einer Klappe versehen sein.

In einer bevorzugten Ausführungsform ist der erste bzw. der zweite Ventilator im ersten bzw. zweiten Strömungskanal angeordnet, vorzugsweise ist der erste Ventilator im ersten Strömungskanal nahe dem Fortluftauslass und der zweite Ventilator im zweiten Strömungskanal nahe dem Zuluftauslass angeordnet. Durch diese Anordnung wird die Abluft durch den Sorptionsrotor hindurch angesaugt und mit dem im ersten Strömungskanal dadurch erzeugten Unterdruck wird wenigstens annähernd vermieden, Belastungsstoffe der Abluft in die Zuluft zu übertragen.

Vorzugsweise ist ein erster Filter im ersten Strömungskanal nahe dem Ablufteinlass und ein zweiter Filter im zweiten Strömungskanal nahe dem Aussenlufteinlass angeordnet, sodass Schmutzklumpen oder Staub nicht in die Vorrichtung eingesaugt werden und sie beschädigen können. Besonders bevorzugt ist die Anwendung von Doppelfiltern, die eine besonders gute Filterung und einfache Wartung erlauben. Schmutzklumpen werden nämlich durch den Grobfilter ausgefiltert und daher wird der stromabwärts folgende Feinstaubfilter geschützt. In Folge dazu kann der Doppelfilter nach einem längeren Wechselintervall als mit einem einfachen Filter ersetzt werden.

In dem Abschnitt der Vorrichtung, welcher zwischen dem Sorptionsrotor und dem Fortluftauslass bzw. dem Aussenlufteinlass liegt, ist ein Umluftdurchlass mit einer Umluftklappe zwischen dem ersten und dem zweiten Strömungskanal angeordnet. Bei geschlossener Fortluftauslass- und Aussenlufteinlassklappe wird die Umluftklappe geöffnet, um eine Luftströmung zwischen dem ersten und dem zweiten Strömungskanal zu erlauben, zum Beispiel für eine Zirkulation der Gebäudeluft.

Bevorzugt umfasst die Vorrichtung weiter einen ersten Temperatur- und Feuchtigkeitssensor in der Abluft, vorzugsweise nahe dem Ablufteinlass, und einen zweiten Temperatur- und Feuchtigkeitssensor in der Zuluft, vorzugsweise nahe dem Zuluftauslass.

Die Vorrichtung wird bevorzugt über eine Steuereinrichtung mit einer Regelungseinheit für die absolute Feuchtigkeit und die Temperatur gesteuert. Eine Anzeige der Feuchtigkeit ist jedoch im relativen sowie absoluten Wert möglich. Die Regulierung der absoluten Feuchtigkeit der Zuluft erfolgt über die Drehgeschwindigkeit des Sorptionsrotors, insbesondere in Abhängigkeit von der Feuchtigkeitsdifferenz zwischen Zuluft und Abluft. Die Temperatur der Zuluft ändert sich in Abhängigkeit ihrer absoluten Feuchtigkeit beim Durchströmen des Sorptionsrotors. Wenn die Zuluft stark befeuchtet werden muss, wird die Drehzahl des Sorptionsrotors erhöht und umgekehrt, wenn die Zuluft wenig befeuchtet werden muss. In einer vorteilhaften Ausführungsform werden die verschiedenen Einheiten der Vorrichtung, wie z.B. die Ventilatoren, die Umluftklappe, die Aussenlufteinlass- und Fortluftauslassklappe und die Nachheizung, auch mit derselben Steuereinrichtung gesteuert. Selbstverständlich können Feuchtigkeits- und Temperaturmessungen im Gebäude oder in der Umgebung in der Regulierung der Vorrichtung berücksichtigt werden.

Die Steuerung der Feuchteübertragung bewirkt eine genaue Feuchteregelung im Gebäude, insbesondere in einer Schwimmhalle, wo die Verdunstung des Beckenwassers infolge einer zu geringe Feuchtigkeit vermieden wird. Dies trägt dazu bei, die gesamte Energiebilanz des Gebäudes, insbesondere der Schwimmhalle, zu verbessern.

Um die Gebäudeluft schnell aufzuwärmen, wird die Vorrichtung in einer Sonderbetriebsart betrieben, wie dies unten erläutert wird. Die Aussenlufteinlass- und Fortluftauslassklappe sind geschlossenen, die Umluftklappe beim Umluftdurchlass ist offen, und der erste und/ oder der zweite Ventilator, sowie vorzugsweise der Sorptionsrotor sind in Betrieb. Dadurch wird die Abluft im ersten Strömungskanal durch den Sorptionsrotor, dann über den Umluftdurchlass in den zweiten Strömungskanal und dort durch den Sorptionsrotor als Zuluft zurück in die Schwimmhalle geführt. Die Erwärmung dieser Zuluft erfolgt durch die Nachheizung stromabwärts des Sorptionsrotors, die je nach erwünschter Temperatur der Gebäudeluft geregelt wird. Wenn die erwünschte Temperatur der Gebäudeluft erreicht ist, wird die Umluftklappe des Umluftdurchlasses geschlossen und werden die Aussenlufteinlass- und Fortluftauslassklappen geöffnet.

Nach dem Anfahren der Vorrichtung geht sie nach einer transienten Anfahrphase in den stationären Betrieb über.

Typischerweise wird in einem Verfahren zum Feuchtigkeits- und Wärmeaustauch für ein Gebäude, insbesondere eine Schwimmhalle, Abluft aus dem Gebäude als Fortluft durch einen einen Ablufteinlass und einen Fortluftauslass eines Gehäuses miteinander verbindenden, ersten Strömungskanal, mittels eines ersten Ventilators abgeführt.

Gleichzeitig wird Aussenluft ins Gebäude als Zuluft durch einen einen Aussenlufteinlass und einen Zuluftauslass des Gehäuses miteinander verbindenden, zweiten Strömungskanal, mittels eines zweiten Ventilators hineingeführt, sodass Wärme zwischen Abluft und Aussenluft über einem Wärmetauscher austauscht wird.

Erfindungsgemäss wird Feuchtigkeit zwischen der Abluft und der Aussenluft über dem Wärmetauscher, welcher durch einen mit variabler Drehgeschwindigkeit antreibbaren Sorptionsrotor gebildet ist, ausgetauscht. Im stationären Betrieb wird mit wenigstens 90%, insbesondere mit wenigstens annähernd 100%, Aussenluft gefahren, welche mit dem Sorptionsrotor, ohne Kondensationsphase, auf die geforderte absolute Feuchtigkeit gebracht wird.

Bei Bedarf wird die Aussenluft auf die erforderliche Temperatur mit einer Nachheizung gebracht, wie schon oben erläutert.

Weitere Vorteile und Eigenschaften der erfindungsgemässen Vorrichtung gehen aus der nachstehenden Beschreibung eines Ausführungsbeispiels hervor, welches anhand der beiliegenden Figuren erläutert wird. Diese zeigen rein schematisch:
- Fig. 1: in einem in vertikal verlaufenden Längsschnitt eine erfindungsgemässe Vorrichtung, wobei die Rotationsachse des Sorptionsrotors in der Schnittebene liegt;
- Fig. 2: ein in einem Mollier h,x Diagramm dargestellten Beispiel des Betriebs einer Vorrichtung mit einem Plattenwärmetauscher zum Austauschen von Feuchtigkeit und Wärme für eine Schwimmhalle; und
- Fig. 3: ein in einem Mollier h,x Diagramm dargestellten Beispiel des Betriebs der erfindungsgemässen Vorrichtung gemäss Fig. 1 zum Austauschen von Feuchtigkeit und Wärme für eine Schwimmhalle.

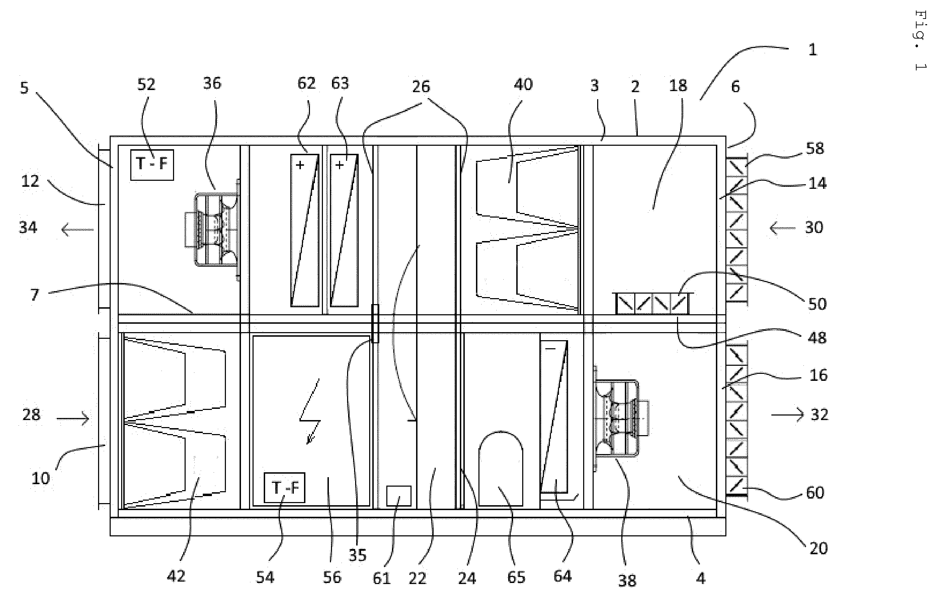

In Fig. 1 ist ein Ausführungsbeispiel der erfindungsgemässen Vorrichtung dargestellt, das im Folgenden näher beschrieben wird.

Die Vorrichtung 1 für ein Gebäude, insbesondere eine Schwimmhalle, zum Austauschen von Feuchtigkeit und Wärme besitzt ein Gehäuse 2, bevorzugt quaderförmig, mit einer oberen Wand 3 (Deckenwand), einer unteren Wand 4 (Bodenwand), zwei Seitenwänden, einer ersten und zweiten Stirnwand 5 bzw. 6, und einer horizontalen Trennwand 7 in halber Höhe des Gehäuses 2. Die erste Stirnwand 5 ist dem Gebäude und die zweite Stirnwand 6 ist der Umgebung zugewandt.

Ein erster Strömungskanal 20 ist durch die untere Wand 4, die Seitenwände und die Trennwand 7 begrenzt und verläuft zwischen einem Ablufteinlass 10 an der ersten Stirnwand 5 und einem Fortluftauslass 16 an der zweiten Stirnwand 6. Ein zweiter Strömungskanal 18 ist durch die obere Wand 3, die Seitenwände und die Trennwand 7 begrenzt und verläuft zwischen einem Aussenlufteinlass 14 an der zweiten Stirnwand 6 und einem Zuluftauslass 12 an der ersten Stirnwand 5.

Vorzugsweise ist das Gehäuse 2 aus Aluminiumblechen gefertigt und bieten somit eine korrosionsbeständige Oberfläche, z. B. für einen Einsatz in einer Schwimmhalle, jedoch sind andere korrosionsbeständige Materialien möglich. Selbstverständlich werden die Materialien für die Herstellung des Gehäuses und im Allgemeinen aller Teile und Baugruppen in dieser Vorrichtung so ausgewählt, dass sie für einen Betrieb in der Einsatzumgebung der Vorrichtung und je nach geltenden Normen tauglich sind. Um die Energiebilanz der Vorrichtung zu verbessern, können das Gehäuse und/ oder Teile der Vorrichtung mit einem Wärmedämmungsmittel versehen werden.

Im Gehäuse 2 ist, vorzugsweise mittig, ein drehbarer, eine Speichermasse bildender Sorptionsrotor 22 in einem Sorptionsrotorgehäuse 24 angeordnet. Die Oberfläche der Speichermasse des Sorptionsrotors 22 ist in bekannter Art und Weise mit Zeolith-Material beschichtet, bevorzugt mit einer Porengrösse zwischen 0,3 nm und 0,5 nm. Die Stirnfläche 26 des Sorptionsrotors 22 verlaufen dabei quer, bevorzugt rechtwinklig, zu den ersten und zweiten Strömungskanälen 20 bzw. 18.

Das stirnseitig jeweils Durchlässe aufweisende Sorptionsrotorgehäuse 24 ist so ausgestaltet, dass die vom Gebäude durch den Ablufteinlass 10 in den ersten Strömungskanal 20 einströmende Abluft 28 den Sorptionsrotor 22 durchströmt, ohne um ihn herumströmen zu können, und danach durch den Fortluftauslass 16 als Fortluft 32 wenigstens annähernd vollständig an die Umgebung abgegeben wird, und gleichzeitig die durch den Aussenlufteinlass 14 in den zweiten Strömungskanal 18 eintretende Aussenluft 30 den Sorptionsrotor 22 durchströmt, ohne um ihn herumströmen zu können, und danach durch den Zuluftauslass 12 als Zuluft 34 dem Gebäude zugeführt wird.

Bevorzugt umfasst der Sorptionsrotor 22 eine Spülzone 35, wo in bekannter Art und Weise der im Sorptionsrotor abtransportierte Abluftanteil mit Aussenluft 30 gespült und der Fortluft 32 zugeführt wird.

Ferner ist in der gezeigten Ausführungsform ein erster bzw. ein zweiter Ventilator 38 bzw. 36 im ersten bzw. zweiten Strömungskanal 20 bzw. 18 angeordnet. Vorzugsweise ist der erste Ventilator 38 im ersten Strömungskanal 20 nahe dem Fortluftauslass 16 und der zweite Ventilator 36 im zweiten Strömungskanal 18 nahe dem Zuluftauslass 12 angeordnet.

Ein erster Filter 42 ist im ersten Strömungskanal 20 vorzugsweise nahe dem Ablufteinlass 10 und ein zweiter Filter 40 im zweiten Strömungskanal 18 nahe dem Aussenlufteinlass 14 angeordnet, sodass Schmutzklumpen oder Staub nicht in die Strömungskanäle 18, 20 eingesaugt werden und sie beschädigen können. Besonders bevorzugt ist die Anwendung von Doppelfiltern, bestehend aus einem Grobpartikelfilter und einem dem Grobpartikelfilter stromabwärts nachgeschalteten Feinpartikelfilter, die eine besonders gute Filterung und einfache Wartung erlauben.

In dem Abschnitt der Vorrichtung 1, welcher zwischen dem Sorptionsrotor 22 und dem Fortluftauslass 16 bzw. dem Aussenlufteinlass 14 liegt, ist in der Trennwand ein Umluftdurchlass 48 mit einer Umluftklappe 50 zwischen dem ersten und dem zweiten Strömungskanal 20 bzw. 18 angeordnet.

Bevorzugt umfasst die Vorrichtung weiter einen ersten Temperatur- und Feuchtigkeitssensor 54 in dem ersten Strömungskanal, vorzugsweise nahe dem Ablufteinlass 10, und einen zweiten Temperatur- und Feuchtigkeitssensor 52 in dem zweiten Strömungskanal, vorzugsweise nahe dem Zuluftauslass 12.

Die Vorrichtung wird bevorzugt über eine Steuereinrichtung 56 mit einer Regelungseinheit für die absolute Feuchtigkeit und die Temperatur gesteuert. Die Regulierung der absoluten Feuchtigkeit der Zuluft 34 erfolgt über die Drehgeschwindigkeit des Sorptionsrotors 22, insbesondere in Abhängigkeit von der Feuchtigkeitsdifferenz zwischen Zuluft 34 und Abluft, und die Temperatur der Zuluft 34 ändert sich in Abhängigkeit seiner absoluten Feuchtigkeit. Die Drehgeschwindigkeit des Sorptionsrotors 22 wird über die Ansteuerung eines Antriebsmotors 61 geregelt.

Ebenfalls werden die weiteren Einheiten der Vorrichtung, wie z.B. die Ventilatoren 38 bzw. 36, die Umluftklappe 50, die Aussenlufteinlass- und Fortluftauslassklappe 58 bzw. 60, der Pumpen-Warmwasser-Erhitzer 62 und die Wärmepumpe 65, mit derselben Steuereinrichtung 56 gesteuert.

In dieser Ausführungsform ist zwischen dem Sorptionsrotor 22 und dem Zuluftauslass 12 ein Pumpen-Warmwasser-Erhitzer 62 und ein Kondensator 63 einer Wärmepumpe 65 zur Erwärmung der Zuluft 34 im zweiten Strömungskanal 18 angeordnet. Die Wärmepumpe 65 ist im ersten Strömungskanal 20 mit einem Verdampfer 64 angeordnet.

Schliesslich sind der Aussenlufteinlass 14 und der Fortluftauslass 16 mit einer Aussenlufteinlass- bzw. Fortluftauslassklappe 58 bzw. 60 versehen, die geschlossen werden können, um die Vorrichtung 1 von der Umgebung zu trennen. Dies kann im nicht-stationären Betrieb der Fall sein, zum Beispiel beim Anfahren der Vorrichtung 1 oder bei der Zirkulation der Schwimmhallenluft über die Vorrichtung 1.

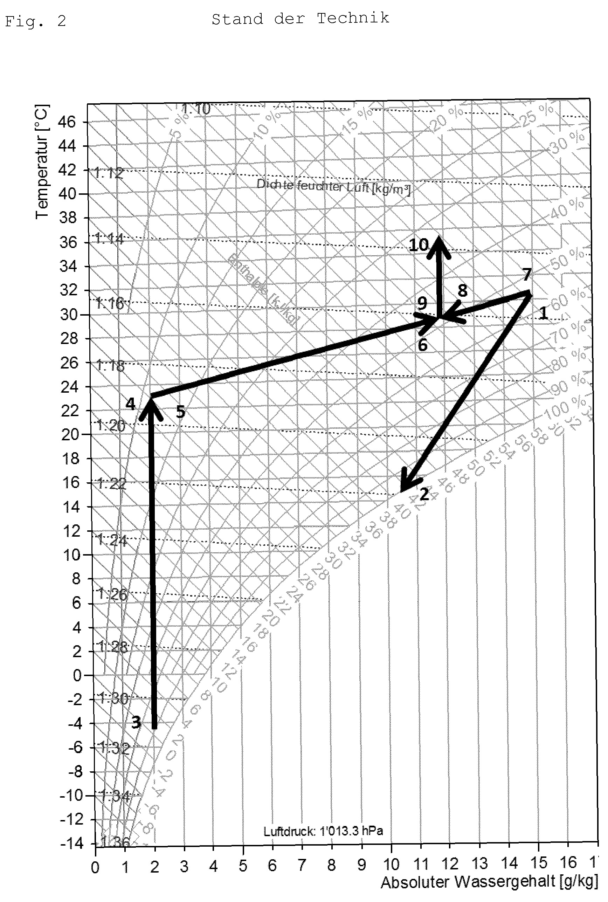

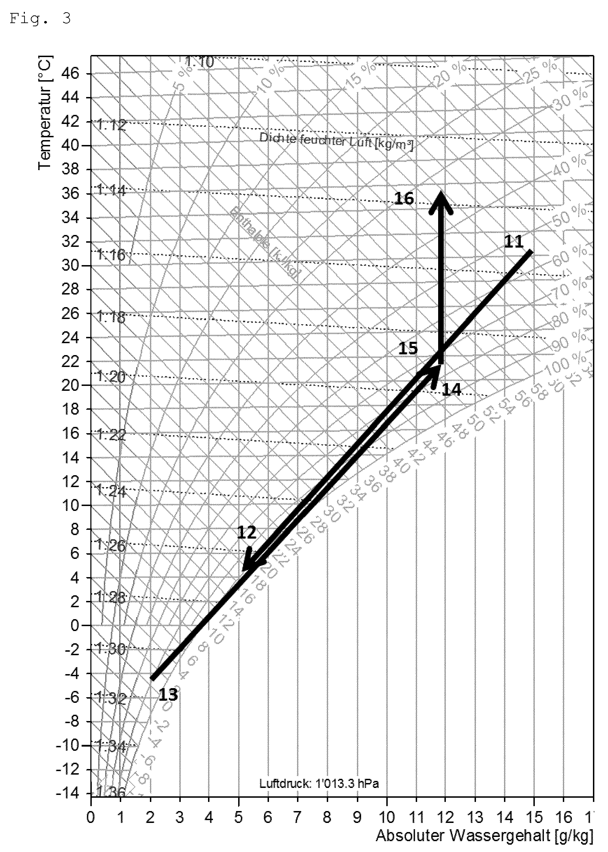

Um den Unterschied in dem Betrieb für eine Schwimmhalle zwischen einer Anlage mit einem Plattenwärmetauscher gemäss Stand der Technik, wie z.B. im Dokument DE 10 2006 007 845 B4, und einer erfindungsgemässen Vorrichtung mit einem Sorptionsrotor darzulegen, wurden Simulationsrechnungen durchgeführt. Das Resultat dieser Simulationsrechnungen wird anhand der Fig. 2 und Fig. 3 näher erläutert.

Die Ausgangsparameter für die Simulation und den Vergleich der zwei Anlagen werden wie folgt festgelegt:
1) Gebäudeparameter
   Länge x Breite x Höhe: 33 m x 25 m x 10 m,
   Fläche: 825 m2,
   Volumen: 8250 m3,
2) Schwimmbeckenparameter
   Länge x Breite: 25 m x 17 m,
   Wasserfläche: 425 m2.
3) Betrieb der Schwimmhalle (erfahrungsgemäss)
   3.1) Luftbedarf 825 m2 x 10 l/s x 3600 s = 29700 m3/h Bedarf an Luftwechsel: 29700 m3 / 8250 m3 = 3.6 mal/h
   3.2) Transmissionsverlust der Schwimmhalle an die Umgebung Wand: 25 m x 10 m x 0.18 W/°C = 45 W/°C
      Dach: 33 m x 25 m x 0.18 W/°C = 195 W/°C
      Fenster: (33 m + 25 m) x 10 m x 1.3 W/°C = 754 W/°C
      Gebäudeleckage: 8250 m3 x 0.2 fach x 0.3 = 550 W/°C
      Gesamte Transmission pro °C = 1544 W/°C
      Temperatur der Schwimmhallenluft = 30 °C
      Temperatur der Aussenluft = -5 °C
      Gesamte Transmission = (30 °C -(-5°C)) x 1544 W/°C = 54 kW
      Zusätzlich zu der Berechnung der Transmission wären noch die innere Wärme aus Personen, Geräte, Beleuchtung und Solargewinn, sowie wie Attraktionen und Pumpen, zu berücksichtigen.
   3.3) Entfeuchtung (= Wärmeverlust durch Verdunstung)
      Abkühlung der Luft: 425 m2 x 0.22 x 0.69 kW = 64.5 kW,
      Abkühlung in Wasser: 1/3 x 64.5 kW = 21.5 kW
      Abkühlung in der Luft: 2/3 x 64.5 kW = 43.0 kW

Die Mollier h,x Diagramme der Fig. 2 und Fig. 3 ermöglichen es, Zustandsänderungen feuchter Luft durch Erwärmung, Befeuchtung, Entfeuchtung, Kühlung und Mischung verschiedener Luftmengen zu ermitteln. In der folgenden Beschreibung der Fig. 2 und Fig. 3 wird jeder Zustand (Temperatur, Luftfeuchtigkeit, Enthalpie und Dichte) mit einem Punkt auf diesen Diagrammen gekennzeichnet und die entsprechenden Grössen (Temperatur und absoluter Wassergehalt) werden in Tabelle 1 und Tabelle 2 Zusammengefasst.

Im stationären Betrieb der Anlage gemäss Stand der Technik wie in Fig. 2 abgebildet, wird Abluft gemäss Punkt 1 aus einer Schwimmhalle als Fortluft gemäss Punkt 2 durch einen einen Aussenlufteinlass und einen Zuluftauslass eines Gehäuses miteinander verbindenden, ersten Strömungskanal, mittels eines ersten Ventilators abgeführt.

Gleichzeitig wird Aussenluft gemäss Punkt 3 in die Schwimmhalle als Zuluft gemäss Punkt 6 durch einen einen Ablufteinlass und einen Fortluftauslass des Gehäuses miteinander verbindenden, zweiten Strömungskanal, mittels eines zweiten Ventilators hineingeführt. Die beiden Strömungskanäle kreuzen sich in einem Plattenwärmetauscher, welcher Wärmeenergie von der Abluft gemäss Punkt 1 an die Zuluft gemäss Punkt 4 überträgt.

Die Abluft gemäss Punkt 1 wird so weit abgekühlt, dass die Sättigungstemperatur im Punkt 2 erreicht wird und Kondensat ausfällt. Dabei wird ein Teil der latenten Wärme der feuchten Abluft frei und über den Plattenwärmetauscher an die Aussenluft gemäss Punkt 3 übertragen. Plattenwärmetauscher können jedoch keine Feuchtigkeit übertragen und die Aussenluft behält ihren ursprünglichen absoluten Wassergehalt während dieser Erwärmung vom Punkt 3 zu 4.

Die geforderte absolute Feuchtigkeit der Schwimmhallenluft wird mit der Zumischung der Abluft (Punkt 7 zu 8) zur erwärmten Zuluft (Punkt 5 zu 6) im richtigen Verhältnis erreicht. Für den Betrieb in Fig. 2 wird ungefähr 80% Abluft mit 20% Zuluft gemischt. Daraus folgt, dass der grösste Teil der mit Chemikalien und Mikro-Organismen beladenen Abluft in der Schwimmhalle mit der Zuluft zurückgeführt wird und in die ganze Schwimmhalle verteilt wird.

Schliesslich wird diese Mischung der Abluft mit der Zuluft weiter erwärmt (Punkt 9 zu 10) um die erforderliche Temperatur der Schwimmhallenluft zu erreichen.

Die Berechnung der Punkte für den Betrieb dieser Vorrichtung ist in der Tabelle 1 zusammengefasst.

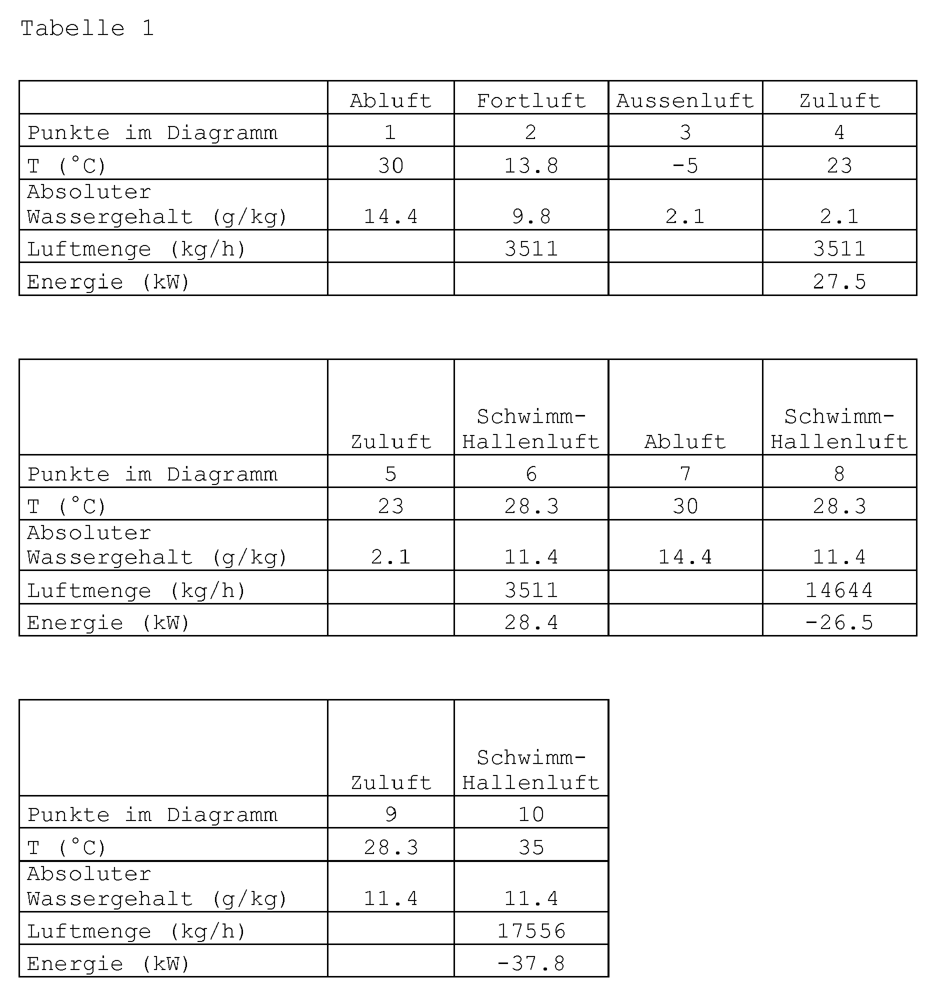

Die Energiebilanz pro Stunde dieses Betriebs besteht aus einer Wärmerückgewinnung von +27.5 kW (Punkt 3 zu 4) und +28.4 kW (Punkt 5 zu 6), und einem Bedarf von -37.8 kW (Punkt 9 zu 10) für die Nacherwärmung. Netto ergibt sich also einen Gewinn von +55.9 kW - 37.8 kW = 18.1 kW.

Eine gute Luftqualität in Schwimmhallen erfordert einen möglichst grossen Austausch der Schwimmhallenluft mit sauberer Aussenluft. Dies wird mit dem Betrieb der erfindungsgemässen Vorrichtung erreicht, wie im Beispiel in Fig. 3 veranschaulicht.

Im stationären Betrieb der erfindungsgemässen Vorrichtung wird Abluft 28 gemäss Punkt 11 aus einer Schwimmhalle als Fortluft 32 gemäss Punkt 12 durch den den Aussenlufteinlass 14 und den Zuluftauslass 12 des Gehäuses 2 miteinander verbindenden, ersten Strömungskanal 20, mittels des ersten Ventilators 38 abgeführt.

Gleichzeitig wird Aussenluft 30 gemäss Punkt 13 in die Schwimmhalle als Zuluft 34 gemäss Punkt 14 durch den den Ablufteinlass 10 und den Fortluftauslass 16 des Gehäuses 2 miteinander verbindenden, zweiten Strömungskanal 18, mittels des zweiten Ventilators 36 hineingeführt. Die Abluft 28 gemäss Punkt 11 und die Aussenluft 30 gemäss Punkt 13 strömen durch den Wärmetauscher 22.

Erfindungsgemäss wird die Feuchtigkeit zwischen der Abluft 28 gemäss Punkt 11 und der Aussenluft 30 gemäss Punkt 13 über dem Wärmetauscher 22, welcher durch den mit variabler Drehgeschwindigkeit antreibbaren Sorptionsrotor 22 gebildet ist, ausgetauscht. Die vom Gebäude durch den Ablufteinlass 10 einströmende Abluft 28 gemäss Punkt 11 wird durch den Fortluftauslass 16 wenigstens annähernd vollständig an die Umgebung abgegeben (Punkte 11 zu 12), und gleichzeitig die durch den Aussenlufteinlass 14 eintretende Aussenluft 30 gemäss Punkt 13 wird mit dem Sorptionsrotor 22, ohne Kondensationsphase, auf die geforderte absolute Feuchtigkeit gebracht (Punkte 13 zu 14), und durch den Zuluftauslass 12 dem Gebäude zugeführt.

Über die Regelung der Geschwindigkeit des Sorptionsrotors 22 wird die Vorrichtung so betrieben, dass die Feuchtigkeit der in die Vorrichtung einströmenden Abluft 28 und eintretenden Aussenluft 30 immer unter dem entsprechenden Feuchtigkeitssättigungspunkt bleibt und folglich eine Kondensationsphase vermieden wird.

Im stationären Betrieb wird mit wenigstens annähernd 100% Aussenluft 30 gemäss Punkt 13 gefahren, so dass einen möglichst grossen Austausch der Schwimmhallenluft mit sauberer Aussenluft 30 ermöglicht wird, ohne die Behaglichkeit in der Schwimmhalle zu reduzieren und praktisch ohne Mischung der mit Chemikalien und Mikro-Organismen beladenen Abluft 28 mit der Zuluft 34.

Schliesslich wird die Zuluft 34 weiter erwärmt (Punkt 15 zu 16) um die erforderliche Temperatur der Schwimmhallenluft zu erreichen.

Die Berechnung der Punkte für diesen Betrieb der erfindungsgemässen Vorrichtung ist in der Tabelle 2 zusammengefasst.

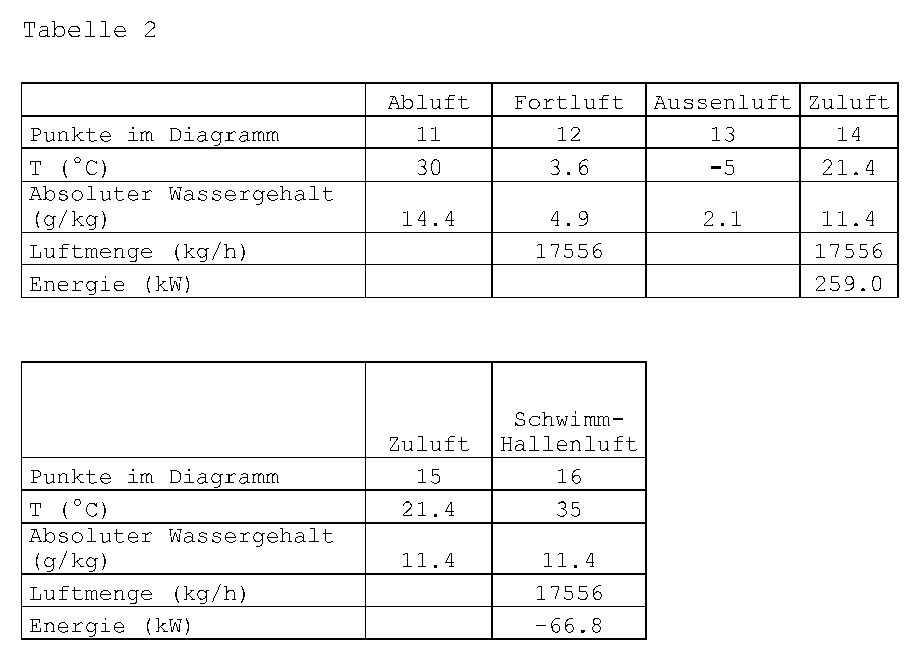

Die Energiebilanz pro Stunde dieses Betriebs besteht aus einer Wärmerückgewinnung von +259.0 kW (Punkt 13 zu 14) und einem Bedarf von -66.8 kW (Punkt 15 zu 16) für die Nacherwärmung. Netto ergibt sich also einen Gewinn von +259.0 kW - 66.8 kW = 192.2 kW.

Zusätzlich zu einem grösseren Austausch der Schwimmhallenluft mit sauberer Aussenluft, ermöglicht die erfindungsgemässe Vorrichtung auch einen energieschonenden Betrieb.
- 1: Vorrichtung
- 2: Gehäuse
- 3: obere Wand
- 4: untere Wand
- 5: erste Stirnwand
- 6: zweite Stirnwand
- 7: Trennwand
- 10: Ablufteinlass
- 12: Zuluftauslass
- 14: Aussenlufteinlass
- 16: Fortluftauslass
- 20: erster Strömungskanal
- 18: zweiter Strömungskanal
- 22: Sorptionsrotor
- 24: Sorptionsrotorgehäuse
- 26: Stirnfläche des Sorptionsrotors
- 28: Abluft
- 30: Aussenluft
- 32: Fortluft
- 34: Zuluft
- 35: Spülzone
- 38: erster Ventilator
- 36: zweiter Ventilator
- 42: erster Filter
- 40: zweiter Filter
- 48: Umluftdurchlass
- 50: Umluftklappe (des Umluftdurchlasses)
- 54: erster Temperatur- und Feuchtigkeitssensor
- 52: zweiter Temperatur- und Feuchtigkeitssensor
- 56: Steuereinrichtung
- 58: Aussenlufteinlassklappe
- 60: Fortluftauslassklappe
- 61: Antriebsmotor
- 62: Pumpen-Warmwasser-Erhitzer
- 63: Kondensator
- 64: Verdampfer
- 65: Wärmepumpe

## Patentansprüche

1. Vorrichtung für ein Gebäude, insbesondere eine Schwimmhalle, zum Austauschen von Feuchtigkeit und Wärme umfassend ein Gehäuse (2) mit einem Ablufteinlass (10) und einem Fortluftauslass (16), die über einen ersten Strömungskanal (20) miteinander verbunden sind, und mit einem Aussenlufteinlass (14) und einem Zuluftauslass (12), die über einen zweiten Strömungskanal (18) miteinander verbunden sind, einen ersten Ventilator (38), um Abluft (28) durch den ersten Strömungskanal (20) aus dem Gebäude als Fortluft (32) abzuführen, und einen zweiten Ventilator (36), um Aussenluft (30) durch den zweiten Strömungskanal (18) in das Gebäude als Zuluft (34) hineinzuführen, und einen Wärmetauscher (22) zum Austauschen von Wärme zwischen der Abluft (28) und der Aussenluft, **dadurch gekennzeichnet, dass** der Wärmetauscher (22) durch einen mit variabler Drehgeschwindigkeit antreibbaren Sorptionsrotor (22) gebildet ist, welcher auch als Feuchtigkeitstauscher zwischen der Abluft (28) und der Aussenluft (30) wirkt, wobei im stationären Betrieb mit wenigstens 90% Aussenluft (30) gefahren wird, welche mit dem Sorptionsrotor (22), ohne Kondensationsphase, auf die geforderte absolute Feuchtigkeit gebracht wird.

2. Vorrichtung nach Anspruch 1, **dadurch gekennzeichnet, dass** im stationären Betrieb mit wenigstens annähernd 100% Aussenluft (30), ohne Kondensationsphase, gefahren wird.

3. Vorrichtung nach Anspruch 1 oder 2, **dadurch gekennzeichnet, dass** die Zuluft (34) auf die erforderliche Temperatur mit einer Nachheizung (62) gebracht wird, insbesondere mit einem Energierückgewinnungssystem.

4. Vorrichtung nach Anspruch 3, **dadurch gekennzeichnet, dass** die Nachheizung (62), vorzugsweise ein Pumpen-Warmwasser-Erhitzer und/ oder eine Wärmepumpe mit Kondensator, im ersten Strömungskanal (18) zur Regulierung der Temperatur der Zuluft (34) angeordnet ist, vorzugsweise zwischen dem Sorptionsrotor (22) und dem Zuluftauslass (12).

5. Vorrichtung nach einem der Ansprüche 1 bis 4, **dadurch gekennzeichnet, dass** ein erster Temperatur- und Feuchtigkeitssensor (54) in der Abluft (28) und ein zweiter Temperatur- und Feuchtigkeitssensor (52) in der Zuluft (34) angeordnet sind.

6. Vorrichtung nach einem der Ansprüche 1 bis 5, **dadurch gekennzeichnet, dass** die Regulierung der absoluten Feuchtigkeit der Zuluft (34) über die Drehgeschwindigkeit des Sorptionsrotors (22) erfolgt, insbesondere in Abhängigkeit von der Feuchtigkeitsdifferenz zwischen Zuluft (34) und Abluft (28).

7. Vorrichtung nach einem der Ansprüche 1 bis 6, **dadurch gekennzeichnet, dass** die Oberfläche der Speichermasse des Sorptionsrotors (22) mit Zeolith mit einer Porengrösse zwischen 0,3 nm und 0,5 nm beschichtet ist.

8. Vorrichtung nach einem der Ansprüche 1 bis 7, **dadurch gekennzeichnet, dass** ein Doppelfilter (42 bzw. 40) im ersten und/oder im zweiten Strömungskanal (20 bzw. 18) angeordnet ist.

9. Vorrichtung nach einem der Ansprüche 1 bis 8, **dadurch gekennzeichnet, dass** ein Umluftdurchlass (48) mit einer Umluftklappe (50) zwischen dem ersten und dem zweiten Strömungskanal (20 bzw. 18) angeordnet ist, wobei die Abluft (28) durch diese Umluftklappe (50) bei geschlossener Aussenlufteinlassklappe (58) und Fortluftauslassklappe (60) umgelenkt wird, sodass ein schnelles Aufwärmen der Gebäudeluft erfolgt.

10. Verfahren zum Feuchtigkeits- und Wärmeaustauch für ein Gebäude, insbesondere eine Schwimmhalle, wobei Abluft (28) aus dem Gebäude als Fortluft (32) durch einen einen Ablufteinlass (10) und einen Fortluftauslass (16) eines Gehäuses (2) miteinander verbindenden, ersten Strömungskanal (20), mittels eines ersten Ventilators (38) abgeführt wird, Aussenluft (30) in das Gebäude als Zuluft (34) durch einen einen Aussenlufteinlass (14) und einen Zuluftauslass (12) des Gehäuses (2) miteinander verbindenden, zweiten Strömungskanal (18), mittels eines zweiten Ventilators (36) hineingeführt wird, und Wärme zwischen Abluft (28) und Aussenluft (30) über einem Wärmetauscher (22) austauscht wird, **dadurch gekennzeichnet, dass** Feuchtigkeit zwischen der Abluft (28) und der Aussenluft (30) über den Wärmetauscher (22), welcher durch einen mit variabler Drehgeschwindigkeit antreibbaren Sorptionsrotor (22) gebildet ist, ausgetauscht wird und im stationären Betrieb mit wenigstens 90% Aussenluft (30) gefahren wird, welche mit dem Sorptionsrotor (22), ohne Kondensationsphase, auf die geforderte absolute Feuchtigkeit gebracht wird.

11. Verfahren nach Anspruch 10, **dadurch gekennzeichnet, dass** im stationären Betrieb mit wenigstens annähernd 100% Aussenluft (30), ohne Kondensationsphase, gefahren wird.

12. Verfahren nach Anspruch 10 oder 11, **dadurch gekennzeichnet, dass** die Zuluft (34) auf die erforderliche Temperatur mit einer Nachheizung (62) gebracht wird.
